# EUROPÄISCHE PATENTANMELDUNG

(11) **EP 3 935 937 A1**
(43) Veröffentlichungstag der Anmeldung: **12.01.2022**
(21) Anmeldenummer: 21165398.5
(22) Anmeldetag: 26.03.2021
(51) Int. Cl.: A01G 17/14, A01G 17/00

(54) **SYSTEM ZUR WETTERDATENERFASSUNG UND EINE EINRICHTUNG HIERZU**

(30) Priorität: 07.07.2020 EP 20184592
(71) Anmelder: voestalpine Krems GmbH, 3500 Krems an der Donau (AT)
(72) Erfinder: Gartner, Stefan, 3500 Krems an der Donau (AT); Kaserer, Klemens, 1210 Wien (AT); Maxera, Cornelia, 3151 St. Pölten (AT); Stumvoll, Matthias, 3610 Weißenkirchen in der Wachau (AT)
(74) Vertreter: Jell, Friedrich

(57) **Zusammenfassung**

Es wird ein System (100) zur Wetterdatenerfassung und eine Einrichtung (4, 400) hierzu für einen, ein insbesondere offenes Profil (10) aufweisenden Pfahl (1a, 1b), insbesondere Spalierpfahl, gezeigt, wobei die Einrichtung (4, 400) ein Gehäuse (8) aufweist. Um einen Weinberg standfest digitalisieren zu können, wird vorgeschlagen, dass das Gehäuse (8) einen ersten, in den Pfahl (1a) in dessen Längsrichtung (L) einschiebbaren Gehäuselängsabschnitt (8a) aufweist.

## Beschreibung

Die Erfindung betrifft eine Einrichtung für einen, ein insbesondere offenes Profil aufweisenden Pfahl, insbesondere Spalierpfahl, wobei die Einrichtung ein Gehäuse aufweist.

Um einen Weinberg zu digitalisieren, ist aus der EP3622809A1 ein Pfahl mit einer drahtlosen Kommunikationseinrichtung samt diversen Sensoren zur Datenerfassung bekannt. Um einen herkömmlichen Spalierpfahl mit solch einer Funktion auszustatten, ist jedoch dieser Spalierpfahl zu ersetzten oder anderwärtig entsprechend zu adaptieren. Eine derartige Maßnahme ist natürlich zeitaufwendig und kostenintensiv - unter anderem, weil Spalierpfähle in den Boden gerammt sind oder eines Fundaments bedürfen, um die abstützende Funktion im Weinberg zu erfüllen.

Alternativ dazu ist bekannt (vgl. TracoVino), an der Außenseite eines Spalierpfahls eine Einrichtung zur Datenerfassung und -übermittlung vorzusehen. Dies erübrigt zwar, den Pfahl auszutauschen, dort angebracht ist diese Einrichtung aber den Witterungsbedingungen ausgesetzt und leicht zu beschädigen. Außerdem behindert diese Einrichtung ein maschinelles Ernten im Weinberg.

Die Erfindung hat sich daher die Aufgabe gestellt, eine alternative Einrichtung zu schaffen, mit der ein Weinberg standfest digitalisiert werden kann, ohne damit Erschwernisse in der Bewirtschaftung des Weinbergs in Kauf nehmen zu müssen.

Die Erfindung löst die gestellte Aufgabe durch die Merkmale des Anspruchs 1.

Indem eine Einrichtung zur Funktionalisierung des Weinbergs verwendet wird, dessen Gehäuse einen ersten, in den Pfahl in dessen Längsrichtung einschiebbaren Gehäuselängsabschnitt aufweist, kann es im Gegensatz zum Stand der Technik unterbleiben, den Pfahl auszutauschen oder eine Einrichtung außen am Pfahl anzubringen. Damit kann der Weinberg standfest digitalisiert werden, ohne dass die Bewirtschaftung des Weinbergs erschwert wird - wie dies beispielsweise der Fall ist, wenn wie im Stand der Technik die Einrichtung außen am Pfahl vorgesehen wird.

Vorzugsweise ist der erste Gehäuselängsabschnitt in seiner Außenseite an die Profilinnenseite des Pfahls in der Kontur derart angepasst ausgebildet, dass damit die Bewegungsfreiheit der Einrichtung innerhalb des Pfahls auf einen Freiheitsgrad in Längsrichtung des Pfahls reduziert ist. Dies erleichtert beispielsweise die Montage der Einrichtung und kann auch für einen sicheren Halt der Einrichtung am Pfahl sorgen.

Weist das Gehäuse auf gegenüberliegenden Gehäuseseiten je mindestens eine vorkragende Schulter, die sich vorzugsweise direkt gegenüberliegen, auf, kann dies die Standfestigkeit der Befestigung am Pfahl deutlich erhöhen. Zudem kann damit auf konstruktiv einfache Weise die Bewegungsfreiheit der Einrichtung gegenüber dem Pfahl auf einen Freiheitsgrad, und zwar auf eine Bewegungsfreiheit in Längsrichtung des Pfahls, eingeschränkt werden. Zudem können die beiden Schultern auch eine Führungsfunktion beim Einschieben der Einrichtung bzw. des ersten Gehäuselängsabschnitts übernehmen und damit die Handhabung der Einrichtung bei der Montage an dem Pfahl weiter erleichtern.

Vorzugsweise weist das Gehäuse einen zweiten Gehäuselängsabschnitt auf, der einen die Einschublänge der Einrichtung begrenzenden Anschlag für die Stirnseite des Pfahls ausbildet. Dies kann die Montage der Einrichtung weiter erleichtern. So erhält man bei der Montage durch die anschlagbegrenzte Einschubmöglichkeit eine Rückantwort, dass der Einsatz auch richtig positioniert ist - dies ist im Speziellen eine Unterstützung für die exakte Positionierung des Sensors an einer Profilöffnung des offenen Profils. Beispielsweise erleichtert dies auch eine mögliche nachfolgende Fixierung der Einrichtung innerhalb des offenen Profils. Vorzugsweise schließt dieser Anschlag an den ersten Gehäuselängsabschnitt an.

Vorzugsweise weist der zweite Gehäuselängsabschnitt eine Kappenform auf, um damit den eingeschobenen Gehäuselängsabschnitt beispielsweise gegenüber Umwelteinflüssen zu schützen. Durch die Kappenform springt der zweite Gehäuselängsabschnitt dem ersten Gehäuselängsabschnitt vor. Vorzugsweise liegt die Kappe in den seitlichen Abmessungen innerhalb des umschreibenden Rechtecks der Stirnseite des Profils des Pfahls. Auch ist vorstellbar, dass die Kappe in den seitlichen Abmessungen größer als das umschreibende Rechteck der Stirnseite des Profils des Pfahls ist.

Vorzugsweise weist die Einrichtung ein mit dem Pfahl formschlüssig zusammenwirkendes bzw. damit zusammenwirkbares Mittel zur Befestigung der Einrichtung am Pfahl auf, um die Einrichtung zuverlässig am Pfahl zu halten. Diese Konstruktion zur Befestigung der Einrichtung kann vereinfacht werden, wenn das Mittel eine Raste ist, beispielsweise eine dem Gehäuse der Einrichtung vorspringende Raste, die mit einem Hinterschnitt am Pfahl eine Rastverbindung ausbildet bzw. hierzu ausgebildet ist.

Weist die Einrichtung eine drahtlose Sende- und Empfangseinrichtung auf, kann sich die drahtlose Kommunikation mit der Einrichtung erleichtern.

Dies insbesondere, wenn der zweite Gehäuselängsabschnitt die drahtlose Sende-und Empfangseinrichtung aufweist. Denn dadurch kann das Material des Pfahls, beispielsweise aus Metall, keine abschirmende Wirkung auf die Sende- und Empfangseinrichtung ausüben.

Vorzugsweise ist die drahtlose Sende- und Empfangseinrichtung außerhalb des Körpers des ersten Gehäuselängsabschnitts vorgesehen, welcher Körper vom Pfahl überdeckt wird, wenn die Einrichtung in einen Pfahl eingeschoben ist. Dies kann die drahtlose Verbindung mit der Einrichtung weiter verbessern.

Die Einrichtung kann mindestens einen ersten, an dem ersten Gehäuselängsabschnitt angeordneten Sensor zur Messdatenerfassung aufweisen, um damit standfest Daten aufzunehmen. In dieser eingeschobenen Lage des ersten Gehäuselängsabschnitts im Pfahl ist jedoch die Funktionalität zur Messdatenerfassung nicht beeinträchtigt, da der Sensor am ersten Gehäuselängsabschnitt insbesondere derart angeordnet ist, dass sich dieser Sensor bei im Pfahl eingeschobenem ersten Gehäuselängsabschnitt im Bereich der Profilöffnung, insbesondere Profillängsöffnung, des offenen Profils des Pfahls befindet. Derart kann der Sensor auch gegenüber Umwelteinflüssen und/oder mechanischer Beschädigung, beispielsweise durch Erntemaschinen, vorteilhaft geschützt angeordnet werden - was zur Erhöhung der Standfestigkeit der Einrichtung beiträgt.

Vorzugsweise weist das Gehäuse eine mit dem Sensor verbundene Gehäuseöffnung auf. Dadurch kann der Sensor geschützt durch das Gehäuse innerhalb des Gehäuselängsabschnitts vorgesehen werden. Dies kann die Standfestigkeit weiter verbessern.

Zudem kann das Gehäuse unterhalb der Gehäuseöffnung einen, an diese anschließenden Zurücksprung aufweisen. Dadurch ist es etwa möglich, eine Ansammlung von Feuchtigkeit, beispielsweise verursacht durch Regen, im Bereich der Gehäuseöffnung zu vermeiden. Eine feuchtigkeitsbedingte Funktionsbeeinträchtigung des Sensors ist damit verhinderbar.

Vorzugsweise wird die Einrichtung bei einem System zur Wetterdatenerfassung verwendet.

Zudem kann dieses System mindestens eine Sensoreinrichtung aufweisen, die von der Einrichtung beabstandet angeordnet ist. Die Einrichtung ist dabei mit der Sensoreinrichtung über eine Datenverbindung zur Datenübertragung von insbesondere Sensordaten verbunden, um die Funktionalität der Einrichtung zu erweitern bzw. damit unterschiedliche Umwelt-Kenngrößen erfassen zu können. Die Datenverbindung kann beispielsweise ein elektrisches Kabel sein.

Vorzugsweise weist die erste Sensoreinrichtung einen Niederschlagsmesser, insbesondere mit einem Kippgefäß zum Auffangen eines Regens, auf. Mit solch einer robusten Messdatenerfassung der Regenwerte dann die Einrichtung die Umwelt genauer digitalisieren bzw. auch die Umwelteinflüsse auf einen Weinberg genauer erfassen.

Vorzugsweise weist die zweite Sensoreinrichtung einen, insbesondere resistiven, Temperatursensor und/oder einen, insbesondere kapazitiven, Feuchtigkeitssensor, auf.

Vorzugsweise weist die dritte Sensoreinrichtung einen, insbesondere kapazitiven, Feuchtigkeitssensor auf, um beispielsweise damit Feuchtigkeit an einer Pflanze nachbilden zu können.

Vorzugsweise weist die vierte Sensoreinrichtung einen Frostsensor auf. Dieser Frostsensor weist einen, insbesondere resistiven, Temperatursensor und/oder einen, insbesondere kapazitiven, Feuchtigkeitssensor auf, um speziell ein Auftreten von Temperaturen unterhalb 0 °C sicher erfassen zu können.

Die erfindungsgemäße Einrichtung oder das System zur Wetterdatenerfassung mit dieser Einrichtung kann sich besonders bei einem Pfahl mit einem, insbesondere offenen, Profil eignen - und zwar insbesondere, wenn das Gehäuse der Einrichtung zumindest mit dem ersten Gehäuselängsabschnitt in das Profil in dessen Längsrichtung eingeschoben ist.

Vorzugsweise ist die Außenseite des ersten Gehäuselängsabschnitts in ihrer Kontur zumindest abschnittsweise komplementär zur Profilinnenseite des offenen Profils ausgebildet, um damit einen erschütterungsfreien oder sogenannten prellfreien Sitz der Einrichtung im Pfahl zu ermöglichen.

Beispielsweise ragt der zweite Gehäuselängsabschnitt aus dem Pfahl über dessen Stirnseite hinaus. Beispielsweise kann der zweite Gehäuselängsabschnitt eine Kappe ausbilden, welche die Stirnseite des Profils verschließt, um damit die Einrichtung gegenüber Umwelteinflüssen zu schützen.

Vorzugsweise ist das System zur Wetterdatenerfassung am Pfahl befestigt. Hierbei kann die erste Sensoreinrichtung im bodenfreien oberen Drittel des Pfahls angeordnet sein, um die Messdatenerfassung unabhängiger von Pflanzen oder vom Bewuchs durchführen zu können. Dies kann die Genauigkeit der Messdatenerfassung weiter erhöhen.

Bevorzugt ist die zweite Sensoreinrichtung im bodenfreien oberen Drittel des Pfahls angeordnet. Damit können die Umwelteinflüsse von außen auf die Pflanzen besser erfasst werden. Bevorzugt ist die zweite Sensoreinrichtung in Richtung des Bodens zur ersten Sensoreinrichtung versetzt am Pfahl angeordnet.

Vorzugsweise ist die dritte Sensoreinrichtung im bodenfreien mittleren Drittel des Pfahls angeordnet. Damit kann beispielsweise auf eine Feuchtigkeit auf den Pflanzen rückgeschlossen werden. Vorzugsweise ist die dritte Sensoreinrichtung flach. Die Größe der Oberfläche einer Seite der dritten Sensoreinrichtung entspricht im Wesentlichen mit der durchschnittlichen Oberfläche einer Blattseite, insbesondere eines Weinblatts. Damit kann die dritte Sensoreinrichtung als Blattfeuchtesensor dienen. Die vierte Sensoreinrichtung kann in der bodenfreien unteren Hälfte des Pfahls angeordnet sein, um eine hohe Frost-Sensitivität sicherzustellen.

In den Figuren ist beispielsweise der Erfindungsgegenstand anhand mehrerer Ausführungsvarianten näher dargestellt. Es zeigen
- Fig. 1: eine schematische Seitenansicht eines Weinbergs mit Pfählen, aufweisend eine Einrichtung zur Messdatenerfassung,
- Fig. 2: eine Seitenansicht auf einen Pfahl nach Fig. 1 mit der Einrichtung nach einem ersten Ausführungsbeispiel,
- Fig. 3: eine Schnittansicht nach III-III der Fig. 2,
- Fig. 4: eine dreidimensionale Ansicht zu der in Fig. 2 gezeigten Einrichtung,
- Fig. 5: eine Seitenansicht auf einen Pfahl der Fig. 1 mit einem System zur Wetterda-tenerfassung, aufweisend eine Einrichtung nach einem zweiten Ausführungs-beispiel,
- Fig. 6: eine dreidimensionale Ansicht der nach Fig. 5 dargestellten Einrichtung nach dem zweiten Ausführungsbeispiel und
- Fig. 7: eine Schnittansicht nach VII der Fig. 5.

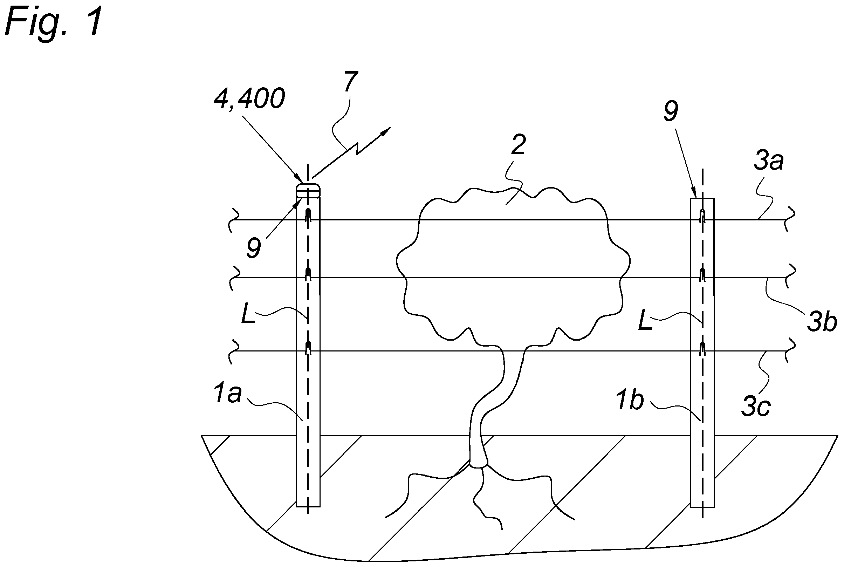

Nach Fig. 1 sind mehrere Pfähle 1a, 1b, nämlich Spalierpfähle, eines Weinbergs 2 geoffenbart, zwischen denen Drähte 3a, 3b, 3c gespannt sind.

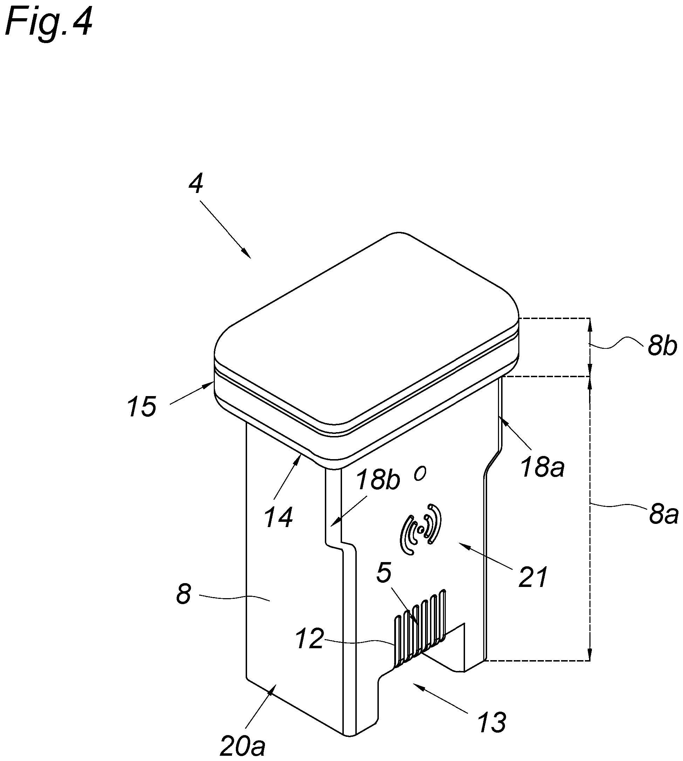

Der erste Pfahl 1a weist eine Einrichtung 4, 400 zur Digitalisierung des Weinbergs 2 auf. Hierzu weist die nach Fig. 4 dargestellte Einrichtung 4 nach dem ersten Ausführungsbeispiel einen ersten Sensor 5 zur Messdatenerfassung der Luftfeuchtigkeit im Weinberg 2 und einen Sende- und Empfangseinrichtung 6 zur kabellosen Datenübertragung 7 auf, beispielsweise der vom Sensor 5 erfassten Messdaten zur Luftfeuchtigkeit. Ein Gehäuse 8 der Einrichtung 4 schützt den Sensor 5 sowie die Sende- und Empfangseinrichtung 6 gegenüber Umwelteinflüssen.

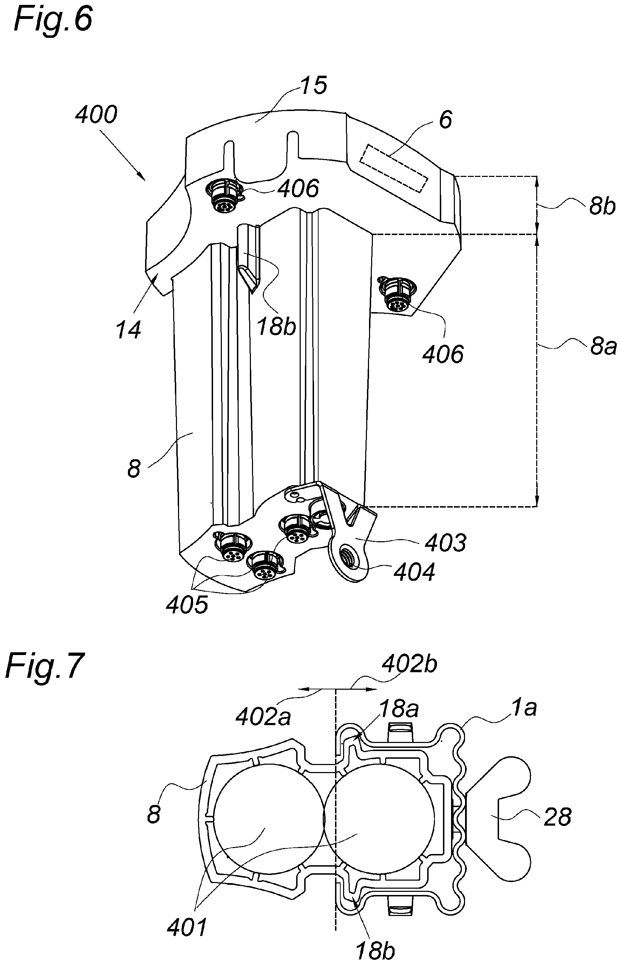

Jene nach Fig. 6 dargestellte Einrichtung 400 nach dem zweiten Ausführungsbeispiel weist ebenso die Sende- und Empfangseinrichtung 6 zur kabellosen Datenübertragung 7 auf. Das Gehäuse 8 der Einrichtung 400 schützt die Sende- und Empfangseinrichtung 6 gegenüber Umwelteinflüssen.

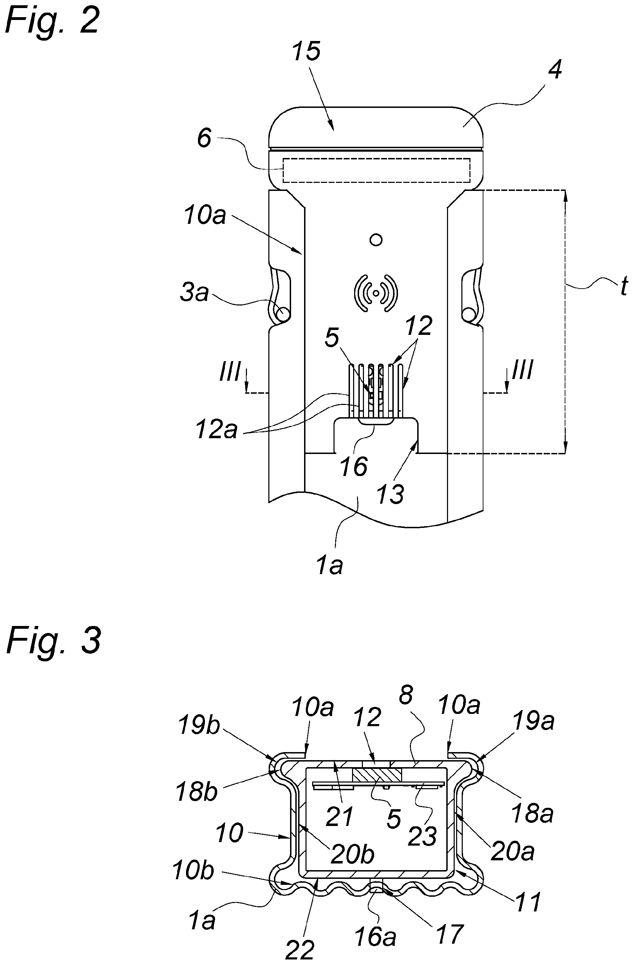

Das Gehäuse 8 der Einrichtung 4 bzw. 400 ist speziell ausgebildet, und zwar weist dieses erfindungsgemäß einen ersten Gehäuselängsabschnitt 8a auf, der in den Pfahl 1a - nämlich in dessen Längsrichtung L - einschiebbar ausgebildet ist. Das Einschieben erfolgt, wie in Fig. 1 und Fig. 2 dargestellt, über die oben offene Stirnseite 9 des ersten Pfahls 1a, welcher Pfahl 1a aus einem offenen Profil 10 aus einem umgeformten Stahlblech besteht.

Durch diese Ausbildung des ersten Gehäuselängsabschnitts 8a ist die Einrichtung 4 bzw. 400 am Pfahl 1a handhabungsfreundlich vorsehbar. Selbiges ist natürlich auch beim Pfahl 1b und anderen, nicht Gezeigten, möglich.

Zudem beeinträchtigt die Lage der Einrichtung 4 bzw. 400 am Pfahl 1a nicht die Bewirtschaftung des Weinbergs 2.

Des Weiteren ist, wie in Fig. 3 und Fig. 7 zu erkennen, die Außenseite 11 des ersten Gehäuselängsabschnitts 8a abschnittsweise in der Kontur komplementär zur Profilinnenseite 10b des offenen Profils 10 ausgebildet. Damit ist der erste Gehäuselängsabschnitt 8a in der Außenseite 11 an die Profilinnenseite 10b des Pfahls 1a in der Kontur derart angepasst ausgeformt, dass damit die Bewegungsfreiheit der Einrichtung 4 bzw. 400 auf einen Freiheitsgrad in Längsrichtung L des Pfahls 1a reduziert ist - was sohin nur ein Einschieben in diese Richtung erlaubt. Die Einrichtung 4 bzw. 400 sitzt demnach stoßfest im Pfahl 1a und ist somit geschützt gegenüber mechanischer Belastung, etwa aufgrund der maschinellen Bewirtschaftung des Weinbergs 2. Konstruktiv einfach gelöst, weist hierzu die Einrichtung 4 bzw. 400 auf gegenüberliegenden Gehäuseseiten je eine vorkragende Schulter 18a, 18b auf, die sich direkt gegenüberliegen. Die vorkragende Schultern 18a, 18b greifen in Rillen 19a, 19b an der Profilinnenseite 10b des offenen Profils 10 ein und liegen dort an. Die Rillen 19a, 19b schließen vorzugsweise an der Profilöffnung 10a des offenen Profils 10 an. Dies sorgt unter anderem für einen festen Sitz der Einrichtung 4 bzw. 400 am Pfahl 1.

Die vorkragende Schultern 18a, 18b sind auf gegenüberliegenden Seitenflächen 20a, 20b der Außenseite 11 des ersten Gehäuselängsabschnitts 8a vorgesehen, die ansonsten eben verlaufen.

Die Vorderseite 21 und die Rückseite 22 der Außenseite 11 des ersten Gehäuselängsabschnitts 8a verlaufen eben, wobei an der Vorderseite 22 der Sensor 5 vorzugsweise mittig angeordnet ist. Die Einrichtung 4 bzw. 400 weist daher im Bereich der Schultern 18a, 18b im Querschnitt im Wesentlichen eine T-förmige Außenkontur auf.

Auch die Vorderseite 21 und/oder die Rückseite 22 liegen an der Profilinnenseite 10b des offenen Profils 10 an. Dies ist auch in Fig. 3 und Fig. 7 zu erkennen, gemäß welchen Figuren ein Spiel zwischen Pfahl 1 und Einrichtung 4 bzw. 400 überzeichnet dargestellt ist, um die Einrichtung 4, 400 einschieben zu können.

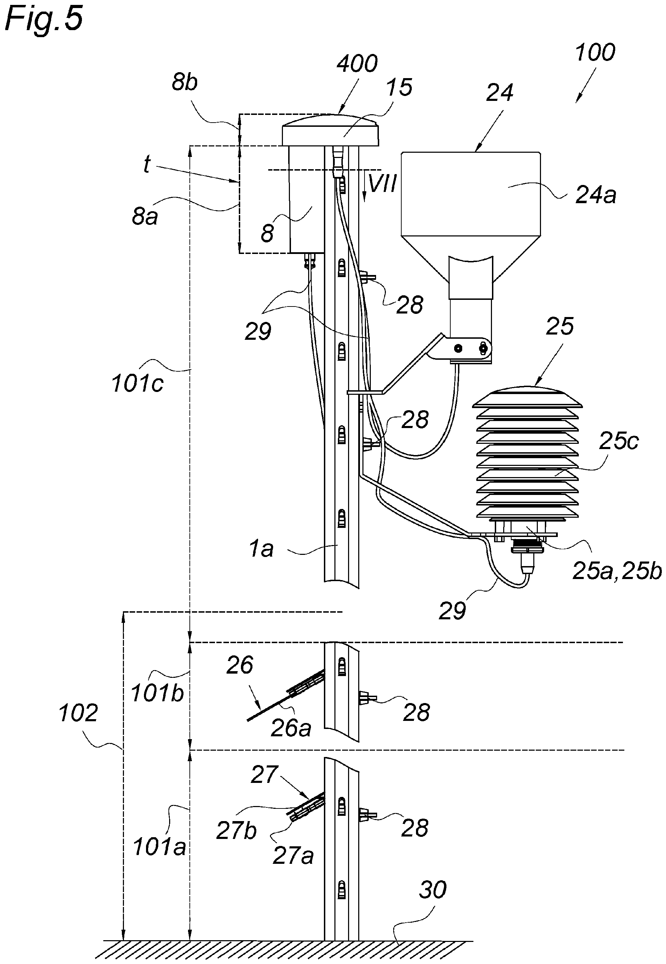

Zudem weist das Gehäuse 8 einen zweiten Gehäuselängsabschnitt 8b auf - siehe hierzu Fig. 4 und 6. Dieser zweite Gehäuselängsabschnitt 8b schließt an den ersten Gehäuselängsabschnitt 8a an und bildet einen Anschlag 14 für die Stirnseite 9 des Pfahls 1a aus - was die Einschublänge t der Einrichtung 4 bzw. 400 begrenzt, wie in Fig. 2 und Fig. 5 zu erkennen. Die vorkragenden Schultern 18a, 18b schließen an den zweiten Gehäuselängsabschnitt 8b an, was die Positionierung dieses zweiten Gehäuselängsabschnitts 8b am Pfahl 1 zusätzlich verbessert. Es kann zudem ausreichen sein, wenn hierzu die vorkragenden Schultern 18a, 18b abschnittsweise an der Außenseite 11 vorgesehen sind.

Der Anschlag 14 umläuft den ersten Gehäuselängsabschnitt 8a geschlossen. Hierzu weist der zweite Gehäuselängsabschnitt eine Kappenform auf, die einerseits aus dem Pfahl 1a über dessen Stirnseite 9 in Längsrichtung des Pfahls 1a hinausragt andererseits aber den Pfahl 1a seitlich nicht übersteht. Dies, indem die Kappe 15 mit ihren seitlichen Abmessungen innerhalb des umschreibenden Rechtecks der Stirnseite des Profils 10 des Pfahls 1a liegt. Somit verschließt die Kappe 15 die Stirnseite 9 des offenen Profils 10 zuverlässig - in der Art einer Endkappe. Dem Pfahl 1a seitliche überstehende Angriffsflächen weist die Einrichtung 4 nicht auf, was aber nicht zwingend der Fall sein muss.

Die Einrichtung 4 wird am Pfahl 1a festgehalten, wenn diese anschlagbegrenzt eingeschoben ist. Hierzu weist die Einrichtung 4 ein mit dem Pfahl 1a formschlüssig zusammenwirkendes Mittel 16 zur Befestigung der Einrichtung 4 am Pfahl 1a auf. Dieses Mittel 16 ist nach dem Ausführungsbeispiel in Fig. 3 als eine dem Gehäuse 8 vorspringende Raste 16a ausgebildet, die mit einem Hinterschnitt 17 des Pfahls 1a eine Rastverbindung eingeht.

Nach Fig. 2 ist zu erkennen, dass das metallische offene Profil 10 die Funktionalität des ersten Sensors 5 der Einrichtung 4 nach dem ersten Ausführungsbeispiel nicht einschränkt. Dieser Sensor 5 ist nämlich am ersten Gehäuselängsabschnitt 8a der Einrichtung 4 derart angeordnet, dass er sich im Falle des im Pfahl 1a eingeschobenen ersten Gehäuselängsabschnitts 8a im Bereich einer Profilöffnung 10a des offenen Profils 10 des Pfahls 1a befindet. Die Einrichtung 4 nach dem ersten Ausführungsbeispiel sorgt dadurch für eine standfeste Digitalisierung des Weinbergs 4. Das Gehäuse 8 weist eine Gehäuseöffnung 12 in Form von parallelen Schlitzen 12a auf, welche in Fig. 2 und Fig. 4 ersichtlich sind. Die Gehäuseöffnung 12 ist mit dem Sensor 5 verbunden und kann damit eine präzise Sensordatenerfassung ermöglichen.

Die Sensordaten des Sensors 5 können beispielsweise von einer Datenverarbeitungseinrichtung 23 der Einrichtung 4, welche Datenverarbeitungseinrichtung 23 ein Datenlogger oder eine Telematikeinrichtung etc. sein kann, über die drahtlosen Sende- und Empfangseinrichtung 6 an andere nicht näher dargestellte Geräte übertragen werden.

Gerade bei einer Feuchtigkeitsmessung im Weinberg 2 ist es von Bedeutung, dass sich Wasser, beispielsweise Tau-, Beregnungs- und/oder Regenwasser, nicht im Bereich des Sensors 5 ansammelt. Aus diesem Grund weist das Gehäuse 8 unterhalb der Gehäuseöffnung 12 einen daran anschließenden Zurücksprung 13 auf, wie in Fig. 2 und Fig. 4 zu erkennen.

Die Einrichtung 4 kann mit mindestens einer weiteren, beispielsweise meteorologischen, Sensoreinrichtung verbunden werden, beispielsweise Niederschlagsmesser, Frostsensor, Windmesssensor, kombinierter Temperatur- und Feuchtigkeitssensor bzw. "Thermo-Hygro" Sensor in einem Schutzgehäuse, Temperatursensor, Feuchtigkeitssensor, etc. in getrennter oder gemeinsamer Ausführung, verbunden werden, wie dies beispielsweise in Fig. 5 dargestellt ist.

Dieses nach Fig. 5 dargestellte System 100 zur Erfassung von Wetterdaten weist vier voneinander beabstandet angeordnete Sensoreinrichtungen 24, 25, 26, 27 zur meteorologischen Messdatenerfassung auf. Die Sensoreinrichtungen 24, 25, 26, 27 sind am Pfahl 1a über Schraubverbindungen 28 zumindest formschlüssig befestigt.

Die erste Sensoreinrichtung 24 ist als Niederschlagsmesser 24a ausgebildet. Der Niederschlagsmesser 24a misst den Niederschlag über ein nicht näher dargestelltes Kippgefäß zum Auffangen von Regen, welches Auffangen aber auch konstruktiv anders gelöst sein kann. Verbesserte meteorologische Messergebnisse vom Weinberg werden erfasst, indem die erste Sensoreinrichtung 24 im bodenfreien (bzw. vom Boden 30 aus gesehenen) oberen Drittel 101c der drei Drittel 101a, 101b, 101c des Pfahls 1a angeordnet ist.

Die zweite Sensoreinrichtung 25 dient zur Bestimmung der Temperatur und der Feuchtigkeit, wofür dieser einen resistiven Temperatursensor 25a und einen kapazitiven Feuchtigkeitssensor 25b in einem Schutzgehäuse 25c aufweist. Verbesserte meteorologische Messergebnisse vom Weinberg werden erfasst, indem die zweite Sensoreinrichtung 25 im bodenfreien oberen Drittel 101c des Pfahls 1b angeordnet ist.

Die dritte Sensoreinrichtung 26 dient zur Bestimmung der Blattfeuchte und weist hierzu einen kapazitiven Feuchtigkeitssensor 26a auf. Die Oberfläche einer Seite des Feuchtigkeitssensors 26a ist jene eines durchschnittlichen Blatts in seiner Größe, nämlich Weinblatts, nachempfunden. Verbesserte meteorologische Messergebnisse vom Weinberg werden erfasst, indem die dritte Sensoreinrichtung 26 im bodenfreien mittleren Drittel 101b des Pfahls 1a angeordnet ist.

Die vierte Sensoreinrichtung 27 dient als Frostsensor und ist hierzu mit einem resistiven Temperatursensor 27a und einem kapazitiven Feuchtigkeitssensor 27b ausgestattet. Die vierte Sensoreinrichtung 27 ist in der bodenfreien unteren Hälfte 102 des Pfahls 1a angeordnet, um die hierzu relevanten meteorologischen Messdaten besser erfassen zu können.

Alle Sensoreinrichtungen 24, 25, 26, 27 sind über, je als elektrisches Kabel ausgeführte Datenverbindungen 29 zur Übertragung von Sensordaten mit der Einrichtung verbunden - wobei in Fig. 5 die Einrichtung 400 nach einem zweiten Ausführungsbeispiel der Erfindung dargestellt ist.

Diese Einrichtung 400 weist zum Unterschied zur nach Fig. 4 dargestellten Einrichtung 4 ein anders geformtes Gehäuse 8 auf - wie durch Vergleich der Fig. 6 und Fig. 4 zu erkennen. So ist der erste Gehäuselängsabschnitt 8a des Ausführungsbeispiels 400 breiter ausgeführt, um damit - wie speziell in Fig. 7 dargestellt - beispielsweise Akkumulatoren 401 mehr Platz bieten zu können. Es ist aber auch vorstellbar, dass in dem aus dem Pfahl 1a herausragenden ersten Querabschnitt 402a des ersten Gehäuselängsabschnitts 8a die Sende- und Empfangseinrichtung 6 vorgesehen ist. Bevorzugt ist diese Sende- und Empfangseinrichtung 6 im zweiten Gehäuselängsabschnitt 8b vorgesehen, wie in Fig. 6 schematisch dargestellt.

Der erste Gehäuselängsabschnitt 8a der Einrichtung 400 nach der zweiten Ausführungsform ist funktional gleich wie der erste Gehäuselängsabschnitt 8a der Einrichtung 4 nach der ersten Ausführungsform in den Pfahl 1a - nämlich in dessen Längsrichtung L - einschiebbar ausgebildet, wie auch in Fig. 7 zu erkennen. Auch diese Einrichtung 400 kann eventuell einen ersten Sensor 5 aufweisen, was nicht weiter dargestellt worden ist.

Zudem sind am ersten Gehäuselängsabschnitt 8a, und zwar am zweiten Querabschnitt 402b, der vom Pfahl aufgenommen wird, Schultern 18a, 18b zu erkennen, die komplementär zur Profilinnenseite 10b des Profils des Pfahls 1a ausgebildet sind. Damit kann die Einrichtung 400 am Pfahl 1a erschütterungsfrei vorgesehen werden. Dies reduziert auch die Bewegungsfreiheit der Einrichtung 400 innerhalb des Pfahls auf einen Freiheitsgrad in Längsrichtung L des Pfahls 1a standfest. Diesbezüglich gelten zum Ausführungsbeispiel der Einrichtung 400 die Merkmale wie zum Ausführungsbeispiel der Einrichtung 4 erwähnt.

Zudem ist die Einrichtung 400 über eine Schraubverbindung 28 als Mittel 16 fest mit dem Pfahl 1a verbunden. Hierzu weist die Einrichtung 400 einen Winkel 403 mit einem Gewinde 404 auf.

Des Weiteren sind nach Fig. 6 diverse elektrische Anschlüsse 405, 406 an der Einrichtung 400 zu erkennen, über welche die Sensoreinrichtungen 24, 25, 26, 27 mit der Einrichtung 400 zur Datenübertragung über je ein Kabel 29 elektrisch verbunden sind. Zumindest ein - im Ausführungsbeispiel drei - erster elektrischer Anschluss 405 befindet sich am Boden des ersten Gehäuselängsabschnitts 8a. Damit ist dieser Anschluss 405 gegenüber Umwelteinflüssen verbessert geschützt.

Auch zumindest ein - im Ausführungsbeispiel zwei - zweiter elektrischer Anschluss 406 befindet sich an der Unterseite der Kappe 15, die den Pfahl 1a in diesem Bereich seitlich vorsteht - siehe hierzu Fig. 5 - und damit auch den zweiten Anschluss 406 gegenüber Umwelteinflüssen schützt.

## Patentansprüche

1. Einrichtung für einen, ein insbesondere offenes Profil (10) aufweisenden Pfahl (1a, 1b), insbesondere Spalierpfahl, wobei die Einrichtung (4, 400) ein Gehäuse (8) aufweist, **dadurch gekennzeichnet, dass** das Gehäuse (8) einen ersten, in den Pfahl (1a) in dessen Längsrichtung (L) einschiebbaren Gehäuselängsabschnitt (8a) aufweist.

2. Einrichtung nach Anspruch 1, **dadurch gekennzeichnet, dass** der erste Gehäuselängsabschnitt (8a) in seiner Außenseite (11) an die Profilinnenseite (10b) des Pfahls (1a) derart in der Kontur angepasst ausgebildet ist, dass damit die Bewegungsfreiheit der Einrichtung (4, 400) innerhalb des Pfahls (1a) auf einen Freiheitsgrad in Längsrichtung (L) des Pfahls (1a) reduziert ist.

3. Einrichtung nach einem der Ansprüche 1 bis 2, **dadurch gekennzeichnet, dass** das Gehäuse (8) auf gegenüberliegenden Gehäuseseiten je mindestens eine vorkragende Schulter (18a, 18b), welche Schultern (18a, 18b) sich vorzugsweise direkt gegenüberliegen, aufweist.

4. Einrichtung nach einem der Ansprüche 1 bis 3, **dadurch gekennzeichnet, dass** das Gehäuse (8) einen zweiten Gehäuselängsabschnitt (8b) aufweist, der einen die Einschublänge (t) der Einrichtung (4, 400) begrenzenden Anschlag (14) für die Stirnseite (9) des Pfahls (1a) ausbildet.

5. Einrichtung nach Anspruch 4, **dadurch gekennzeichnet, dass** der zweite Gehäuselängsabschnitt (8b) die Form einer Kappe aufweist.

6. Einrichtung nach einem der Ansprüche 1 bis 5, **dadurch gekennzeichnet, dass** die Einrichtung (4, 400) ein mit dem Pfahl (1a) formschlüssig zusammenwirkbares Mittel (16), insbesondere eine Raste (16a), zur Befestigung der Einrichtung (4, 400) am Pfahl (1a) aufweist.

7. Einrichtung nach einem der Ansprüche 1 bis 6, **dadurch gekennzeichnet, dass** die Einrichtung (4, 400) eine drahtlose Sende- und Empfangseinrichtung (6) aufweist.

8. Einrichtung nach Anspruch 7, **dadurch gekennzeichnet, dass** der zweite Gehäuselängsabschnitt (8b) die drahtlose Sende- und Empfangseinrichtung (6) aufweist.

9. Einrichtung nach Anspruch 7 oder 8, **dadurch gekennzeichnet, dass** die drahtlose Sende- und Empfangseinrichtung (6) außerhalb des Körpers des ersten Gehäuselängsabschnitts (8a) vorgesehen ist, welcher Körper zum Einschieben in den Pfahl (1a) vorgesehen ist.

10. Einrichtung nach einem der Ansprüche 1 bis 10, **dadurch gekennzeichnet, dass** die Einrichtung (4) mindestens einen ersten, an dem ersten Gehäuselängsabschnitt (8a) angeordneten Sensor (5) zur Messdatenerfassung aufweist, wobei der erste Sensor (5) am ersten Gehäuselängsabschnitt (8a) insbesondere derart angeordnet ist, dass sich dieser Sensor (5) bei im Pfahl (1a) eingeschobenem ersten Gehäuselängsabschnitt (8a) im Bereich einer Profilöffnung (10a), insbesondere Profillängsöffnung, des offenen Profils (10) des Pfahls (1a) befindet.

11. System zur Wetterdatenerfassung mit der Einrichtung (4, 400) nach einem der Ansprüche 1 bis 10.

12. System nach Anspruch 11 und mit mindestens einer Sensoreinrichtung, die von der Einrichtung (4, 400) beabstandet angeordnet ist, wobei der Sensoreinrichtung (24, 25, 26, 27) mit der Einrichtung (4, 400) über eine Datenverbindung (29), insbesondere einem elektrischen Kabel, zur Datenübertragung von insbesondere Sensordaten verbunden ist.

13. System nach Anspruch 12, **dadurch gekennzeichnet,**
**dass** die erste Sensoreinrichtung (24) einen Niederschlagsmesser (24a), insbesondere mit einem Kippgefäß zum Auffangen eines Regens, aufweist, und/oder dass die zweite Sensoreinrichtung (25) einen, insbesondere resistiven, Temperatursensor (25a) und/oder einen, insbesondere kapazitiven, Feuchtigkeitssensor (25b), und/oder
**dass** die dritte Sensoreinrichtung (26) einen, insbesondere kapazitiven, Feuchtigkeitssensor (26a) aufweist, und/oder
**dass** die vierte Sensoreinrichtung (27) einen Frostsensor mit einem, insbesondere resistiven, Temperatursensor (27a) und/oder mit einem, insbesondere kapazitiven, Feuchtigkeitssensor (27b) aufweist.

14. Pfahl, insbesondere Spalierpfahl, mit einem, insbesondere offenen, Profil (10) und mit der Einrichtung (4, 400) nach einem der Ansprüche 1 bis 10 oder mit dem System zur Wetterdatenerfassung nach einem der Ansprüche 11 bis 13, wobei das Gehäuse (8) der Einrichtung (4, 400) zumindest mit dem ersten Gehäuselängsabschnitt (8a) in das Profil (10) in dessen Längsrichtung (L) eingeschoben ist.

15. Pfahl nach Anspruch 14, **dadurch gekennzeichnet, dass** die Außenseite (11) des ersten Gehäuselängsabschnitts (8a) zumindest abschnittsweise komplementär zur Profilinnenseite (10b) des Profils (10) ausgebildet ist.

16. Pfahl nach Anspruch 14 oder 15, **dadurch gekennzeichnet, dass** der zweite Gehäuselängsabschnitt (8b) aus dem Pfahl (1a) über dessen Stirnseite (9) hinausragt und insbesondere eine Kappe (15) ausbildet, welche die Stirnseite (9) des Profils (10) verschließt.

17. Pfahl nach einem der Ansprüche 14 bis 16 und mit dem am Pfahl (1a) befestigten System (100) zur Wetterdatenerfassung,
wobei die erste Sensoreinrichtung (24) im bodenfreien oberen Drittel (101c) des Pfahls (1a) angeordnet ist, und/oder
wobei die zweite Sensoreinrichtung (25) im bodenfreien oberen Drittel (101c) des Pfahls (1a) angeordnet ist, und/oder
wobei die dritte Sensoreinrichtung (26) im bodenfreien mittleren Drittel (101b) des Pfahls (1a) angeordnet ist, und/oder
wobei die vierte Sensoreinrichtung (27) in der bodenfreien unteren Hälfte (102) des Pfahls (1a) angeordnet ist.
